## Europäisches Patentamt

## European Patent Office

## Office européen des brevets

(11) Numéro de publication: **0 015 829**
**B1**

---

(12) **FASCICULE DE BREVET EUROPEEN**

(45) Date de publication du fascicule du brevet:
**01.12.82**

(21) Numéro de dépôt: **80400276.4**

(22) Date de dépôt: **27.02.80**

(51) Int. Cl.³: **B 64 G 1/10**, G 05 D 3/12,
G 01 C 21/24

---

(54) Procédé électromagnétique pour régler l'orientation d'une plate-forme et plate-forme mettant en oeuvre ce procédé.

---

(30) Priorité: **28.02.79 FR 7905283**

(43) Date de publication de la demande:
**17.09.80 Bulletin 80/19**

(45) Mention de la délivrance du brevet:
**01.12.82 Bulletin 82/48**

(84) Etats contractants désignés:
**AT BE CH DE GB IT NL SE**

(56) Documents cités:
**FR-A-1 418 751**
**FR-A-1 602 955**
**US-A-3 230 377**
**US-A-3 775 656**

(73) Titulaire: **Societe Nationale Industrielle Aerospatiale**
**Société anonyme dite:, 37 Bld de Montmorency,**
**F-75016 Paris (FR)**

(72) Inventeur: **Hubert, Bernard, Le Sud Est 28, rue Notre**
**Dame des Anges, F-06110 Le Cannet (FR)**
Inventeur: **Poubeau, Pierre, 6, allée du Bois Domaine de**
**Grandchamp, F-78230 Le Pecq (FR)**

(74) Mandataire: **Rinuy, Guy et al, 14, Avenue de la Grande**
**Armée, F-75017 Paris (FR)**

---

## Procédé électromagnétique pour régler l'orientation d'une plate-forme et plate-forme mettant en œuvre ce procédé

La présente invention se rapporte au domaine des plates-formes destinées à supporter des matériels devant être orientés avec précision selon deux axes, et elle concerne plus particulièrement, sur les satellites notamment, l'orientation des antennes et des volants d'inertie destinés à en permettre le pilotage.

On connaît les problèmes posés par l'orientation de telles plates-formes et les solutions mécaniques qui y ont été apportées.

Certaines de ces solutions antérieures découlaient du principe des liaisons à deux axes d'articulation du type cardan qui autorise deux degrés de liberté totalement indépendants l'un de l'autre, et il peut être noté à cet effet que la majeure partie des dispositifs de pointage en site et gisement connus faisaient appel à un tel procédé.

Malheureusement, tous les dispositifs antérieurs connus mettent en œuvre des moyens mécaniques de liaison qui impliquent des frottements générateurs de couples au niveau des articulations et qui conduisent de toute manière à des phénomènes d'usure impossibles à empêcher et inadmissibles sur un satellite.

Si de telles réactions mécaniques sont négligeables dans la majeure partie des cas rencontrés, elles peuvent être par contre très perturbatrices au niveau d'un satellite où la qualité des pointages de l'antenne dépend, en particulier, de l'absence de couples déstabilisants.

Diverses tentatives ont bien été faites pour s'affranchir des liaisons mécaniques; mais, à la connaissance de la titulaire, aucune n'a pu faire l'objet de réalisations pratiques telles que celles envisagées à travers la présente invention.

On peut citer, par exemple, le brevet US-A No 3230377 qui vise l'utilisation, dans un satellite habité, d'un palier à air comprimé tel que les frottements soient réduits, associé à des moyens électromagnétiques.

Selon l'invention, la plate-forme portant l'élément à pointer, qu'il s'agisse par exemple d'une antenne ou bien encore d'un volant d'inertie destiné au pilotage d'un engin spatial, avec ou sans stockage cinétique d'énergie, est contrôlée selon deux axes par des moyens électromagnétiques dont la particularité essentielle consiste en ce que, en plus de l'annulation pratique de tous les frottements, les courants de commande du contrôle d'orientation peuvent être rendus rigoureusement proportionnels aux déplacements angulaires de la plate-forme, cela conduisant à un asservissement particulièrement aisé à mettre en œuvre.

D'une manière plus précise, l'invention vise un procédé électromagnétique pour régler l'orientation d'une plate-forme, lequel consiste, dans un système à au moins trois liaisons entre la plate-forme et un plan fixe:

— à définir un plan de référence de la plate-forme et portant au moins un point de référence d'assujettissement au plan fixe,

— à disposer entre ladite plate-forme et ledit plan fixe au moins un dispositif électromagnétique à aimants permanents liés à ladite plate-forme et à bobine liée audit plan fixe,

— à détecter un écart de dépointage de ladite plate-forme et à délivrer une tension sensiblement proportionnelle audit dépointage,

— à amplifier ladite tension à travers une chaîne d'asservissement et à appliquer le courant résultant sur les conducteurs de bobine, de telle sorte que les forces laplaciennes engendrées sur les aimants par ledit courant soit à même de produire le déplacement angulaire de ladite plate-forme par rapport audit plan fixe.

L'invention vise également une plate-forme mettant en œuvre le procédé ci-dessus, laquelle comprend: les dispositifs électromagnétiques comprenant chacun les aimants liés à la plate-forme qui contient ledit plan de référence; la bobine liée mécaniquement audit plan fixe et disposée dans l'entrefer desdits aimants; le détecteur de dépointage fournissant la tension sensiblement proportionnelle audit dépointage, et la chaîne d'asservissement et d'amplification, ledit point de référence étant assujetti audit plan fixe.

L'invention sera de toute manière bien comprise dans la suite du texte qui va exposer, à l'appui des dessins annexés, diverses formes de réalisations mettant en œuvre ladite invention.

Sur les dessins:

la fig. 1 est une vue très schématique montrant, en vue de face, la localisation des régions d'implantation des dispositifs électromagnétiques d'orientation d'une plate-forme selon l'invention,

la fig. 2 est une vue schématique montrant, en coupe axiale, la localisation des différents éléments mis en œuvre dans l'invention,

la fig. 3 est une vue schématique partielle axiale montrant le mécanisme électromagnétique d'orientation de la plate-forme représenté à titre d'exemple sur la fig. 2,

la fig. 4 est une vue schématique partielle axiale montrant à titre d'exemple un autre mécanisme électromagnétique d'orientation de la plate-forme,

la fig. 5 est une coupe selon V-V de la fig. 4,

la fig. 6 est une vue schématique partielle axiale montrant à titre d'exemple un troisième mécanisme électromagnétique d'orientation de la plate-forme,

la fig. 7 est une coupe selon VII-VII de la fig. 6,

la fig. 8 est une vue schématique partielle axiale montrant à titre d'exemple l'application de l'invention pour l'orientation d'une plate-forme portant une antenne appliquée à un satellite,

la fig. 9 est une vue schématique partielle axiale montrant à titre d'exemple l'application de l'invention pour l'orientation d'une plate-forme portant un volant d'inertie appliqué sur un satellite,

la fig. 10 est une vue en perspective partielle montrant un système mécanique permettant d'assujettir sensiblement la plate-forme à une distance donnée au plan d'appui tout en permettant le débattement angulaire de cette plate-forme,

la fig. 11 est une vue en perspective partielle montrant en variante un autre système mécanique permettant d'assujettir sensiblement la plate-forme à la même distance donnée du plan d'appui.

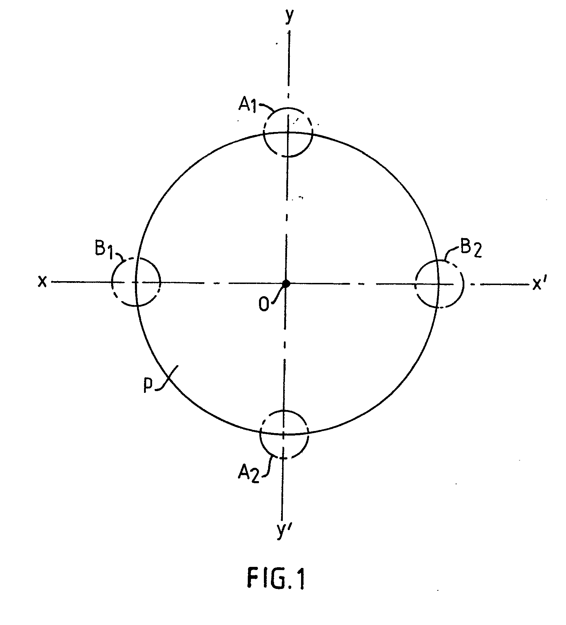

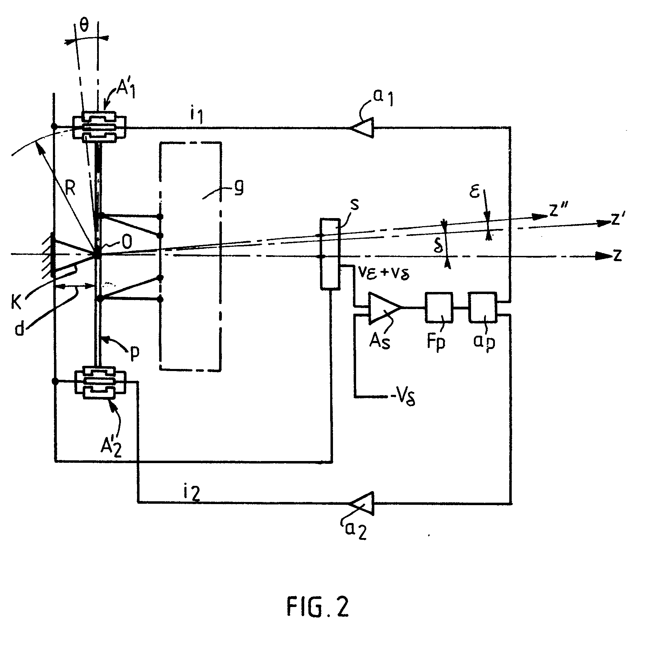

Si l'on se reporte aux fig. 1 et 2, on voit que le problème à résoudre consiste à permettre ce pivotement, sans introduction de frottement et par le fait d'un asservissement approprié, d'une plate-forme représentée schématiquement et symboliquement par le plan p passant par le point O, maintenu sensiblement à la distance d.

Le pivotement de la plate-forme p s'effectue autour des axes x, x' et y, y', et cela est rendu possible dans l'invention par le fait de la mise en œuvre de moyens électromagnétiques positionnés respectivement sur lesdits axes dans les régions A1, A2 et B1, B2.

Bien que les moyens électromagnétiques puissent être de différents types, comme cela sera explicité dans la suite du texte, il a été nécessaire de les caractériser sur la fig. 2 de manière à permettre la compréhension du principe même de l'invention.

De même, l'assujettissement du point O sensiblement à la distance d peut être obtenu de différentes manières, notamment par des moyens mécaniques, ce qui sera également mieux exposé par la suite.

Le mode de liaison qui permet l'assujettissement du point O présente, en tout état de cause, une raideur K qui intervient dans l'élaboration des caractéristiques de l'asservissement déterminant l'orientation de la plate-forme.

Cet asservissement est obtenu, en référence à la fig. 2, à partir d'un détecteur s de dépointage de l'angle $(\varepsilon+\delta)$ représentant l'erreur entre la direction de référence oz et la direction effectivement visée oz'', la direction oz' étant, pour sa part, la direction de référence choisie et $\delta$ représentant un dépointage permanent éventuel.

De ce fait, l'asservissement est tel que l'on a en permanence proportionnalité entre le signal d'erreur $\varepsilon$ mesuré par le détecteur s, après soustraction du dépointage permanent choisi (qui peut être par exemple du type radiofréquence pour une antenne de satellite) et le courant i circulant dans les bobinages des dispositifs électromagnétiques A1, A2, B1 et B2.

Ces dispositifs électromagnétiques mettent en œuvre l'interaction électrodynamique de Laplace entre champ magnétique et courant traversant les bobinages

$$\vec{F} = \int \vec{i}\, dl \wedge \vec{B}$$

et se comportent donc comme un galvanomètre à cadre mobile réalisé en configuration linéaire.

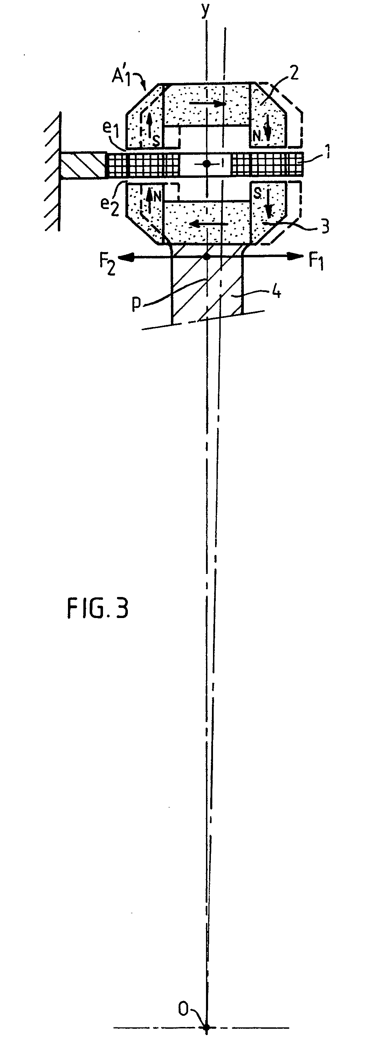

Dans les dispositifs électromagnétiques A'1, A'2 ressortant de la fig. 2, dont un modèle est représenté à plus grande échelle sur la fig. 3, les fils de bobine 1 sont parallèles au plan p et dans une direction sensiblement orthogonale à l'axe oy.

La bobine 1 liée mécaniquement au plan fixe est enfourchée perpendiculairement au plan p dans les entrefers e1, e2 d'aimants 2 et 3 liés à la plate-forme 4 contenant le plan p de telle sorte que, lorsque le courant i, issu de la chaîne d'asservissement et d'amplification, traverse la bobine 1, les forces F1 (ou F2 selon le sens de circulation du courant), apparaissant alors en réaction sur lesdits aimants 2 et 3, entraînent de ce fait la rotation du plan p.

Les lignes de force de l'induction magnétique B étant perpendiculaires aux conducteurs, l'expression de la force en fonction du courant i, du nombre de spires n de la bobine, de la longueur 1 de fil dans chaque entrefer et chaque spire, s'exprime bien par la relation :

$$F = 2\, B l n i$$

ce qui met en évidence le fait que la force est bien proportionnelle au courant qui traverse la bobine, le sens de cette force dépendant par ailleurs du sens de ce courant.

Comme l'asservissement est conçu pour que l'on ait en permanence proportionnalité entre le signal d'erreur $\varepsilon$ mesuré par le détecteur s et les courants i1, i2 circulant dans les bobines des dispositifs A1, A2 (ou des courants i3, i4 circulant dans les bobines des dispositifs B1, B2), il peut être prévu que le coefficient de proportionnalité, qui est le gain k de la boucle d'asservissement, soit déterminé pour assurer la précision du pointage désiré.

En référence à la fig. 2, on voit que le détecteur s délivre une tension $v\varepsilon$ proportionnelle à l'angle $\varepsilon$ de dépointage détecté, ce qui conduit, pour un gain donné, à :

$$v\varepsilon = ks\varepsilon$$

Comme on sait que le courant circulant dans les bobines fournit une force électromotrice :

$$F = 2Blni$$

au niveau de chaque dispositif électromagnétique, on en déduit que, pour ces deux dispositifs électromagnétiques situés à la distance R du centre de rotation O, le couple résultant sera :

$$C = 4RBlni$$

En tenant compte de la raideur K du dispositif de liaison, la plate-forme va subir une rotation $\theta$ donnée par :

$$C = K\theta$$

où

$$\Theta = \frac{4RBlni}{K}$$

Comme chaque amplificateur de puissance a1, a2 ou a3, a4 délivre un courant i1, i2 ou i3, i4, tel que :

| en y | en x |
|---|---|
| $i_1 = k_1 v\varepsilon$ | $i_3 = k_3 v\varepsilon$ |
| $i_2 = k_2 v\varepsilon$ | $i_4 = k_4 v\varepsilon$ |

on obtient finalement la relation :

$$\Theta = \frac{2R\, Bl\, n\, (k1 + k2) ks\varepsilon}{K}$$

$$\Theta = \frac{2R\, Bl\, n\, (k3 + k4) ks\varepsilon}{K}$$

Bien entendu, le cas le plus courant sera k1 = k2 et k3 = k4; le gain, qui correspond au coefficient de proportionnalité entre le courant et la détection, peut être choisi de telle sorte que, pour la valeur maximale de la rotation θ, l'erreur de pointage ε soit limitée à la valeur désirée.

A titre d'exemple et pour une orientation d'antenne de satellite, on peut dépasser ε = 0,01° pour θ = 0,5° sans difficulté particulière.

Il est possible d'élaborer ainsi la chaîne d'asservissement du système en phase dynamique:

— As représente l'amplificateur du signal d'erreur vε en provenance du détecteur s et qui tient compte du signe vδ provenant d'un dépointage permanent choisi.

— Fp est un filtre passe-bas qui supprime le bruit pouvant exister au niveau du signal du détecteur s.

— ap est un filtre donnant une avance de phase de la commande en courant i par rapport à la détection de façon à assurer l'amortissement actif de l'ensemble oscillant constitué par le système de liaison à raideur K et l'inertie de la plate-forme.

— a1, a2 sont des amplificateurs de puissance délivrant les courants i1, i2 sur les dispositifs électromagnétiques A'1, A'2 (les amplificateurs a3, a4 non représentés délivrent des courants i3, i4 respectivement sur les dispositifs électromagnétiques B1, B2 correspondants).

Il est bien évident que ce qui vient d'être exposé et qui est relatif au pointage d'une antenne sur un satellite peut aisément être transposé pour définir l'orientation de l'axe de rotation d'un volant d'inertie et, dans un tel cas, seul le détecteur doit être adapté en conséquence selon l'axe des x et l'axe des y.

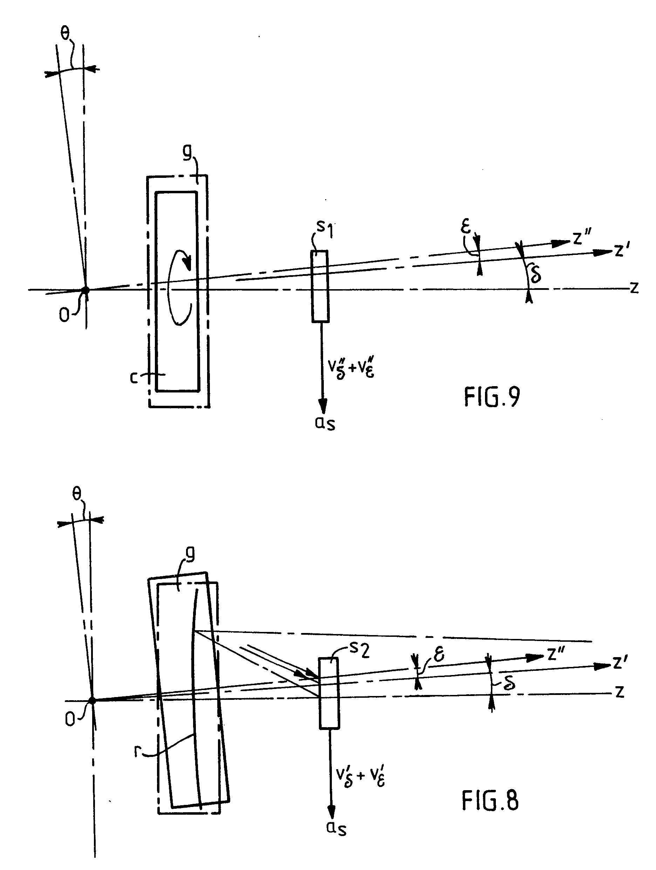

A cet effet, les fig. 8 et 9 sont représentatives respectivement d'un système d'orientation d'antenne r avec son détecteur d'écart délivrant les signaux v'ε d'écart ε, et éventuellement v'δ de dépointage permanent δ, et d'un système d'orientation d'axe de rotation d'une ou deux roues d'inertie g et c, g comportant ou non un stockage d'énergie cinétique avec son détecteur d'écart délivrant les signaux v"ε d'écart ε et éventuellement v"δ de dépointage δ, permettant ainsi le pilotage du satellite.

En variante du dispositif électromagnétique représenté sur la fig. 3, d'autres dispositifs équivalents peuvent être envisagés.

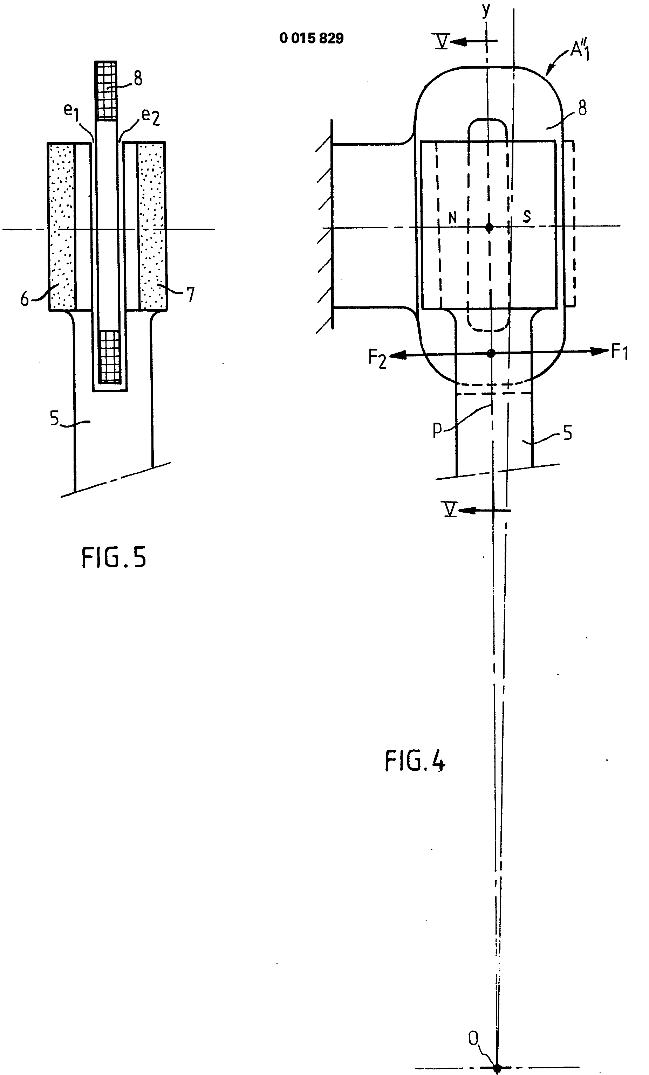

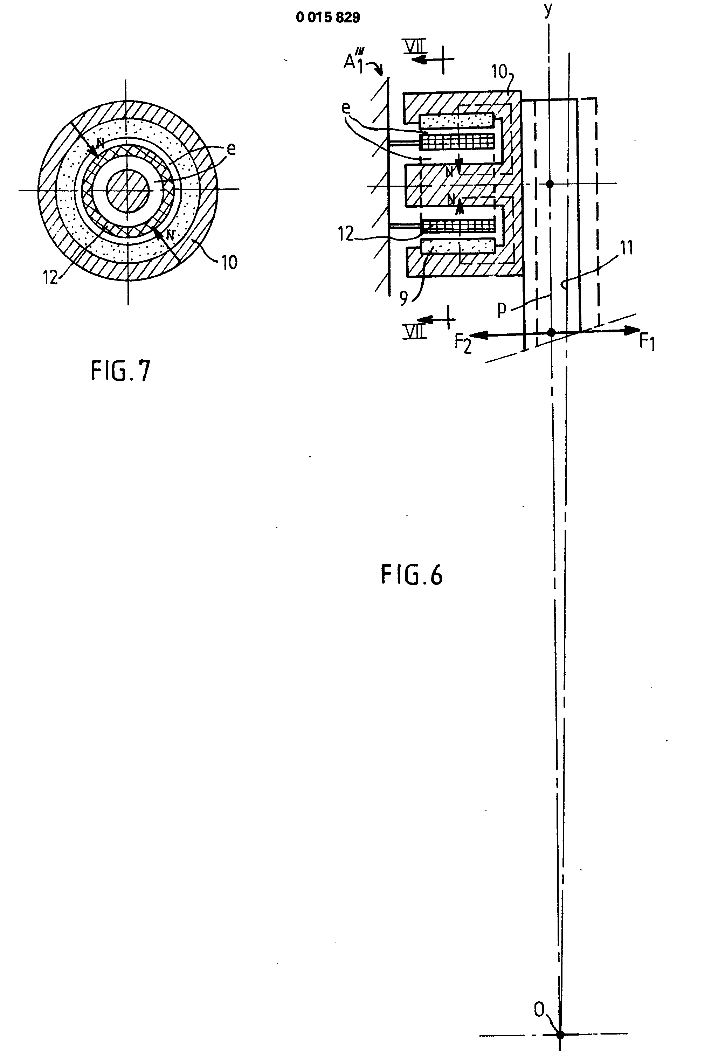

A titre d'exemple, chacun des dispositifs électromagnétiques représenté sur les fig. 4 et 5 et qui portent le repère A"1 comporte deux paires d'aimants 6, 7 solidaires de la plate-forme 5 contenant le plan p et ces aimants enfourchent parallèlement au plan p le bobinage 8 solidaire du plan d'appui.

Les conducteurs de bobines situés dans l'entrefer e1, e2 des aimants entraînent, selon le sens de passage du courant, des forces F1 ou F2 opérant sur la plate-forme pour en provoquer son déplacement angulaire.

Dans un autre exemple représenté sur les fig. 6 et 7, chacun des dispositifs électromagnétiques qui portent le repère A'''1 comporte un aimant annulaire à aimantation radiale 9 refermant le flux magnétique à travers une culasse 10 et qui est solidaire de la plate-forme 11 contenant le plan p.

Dans le flux d'entrefer annulaire e est disposé le bobinage circulaire 12 solidaire du plan d'appui et le courant dans ce bobinage entraîne, selon son sens de circulation, le déplacement de la plate-forme 11 sous l'effet de la force F1 ou F2.

Il est bien évident que ces variantes de dispositifs électromagnétiques, qui sont équivalentes au plan conceptuel, pourraient être complétées par tout autre dispositif électromécanique produisant les mêmes effets.

Il a été précédemment exposé que le point O était assujetti au plan fixe par des moyens qui pouvaient être du type mécanique.

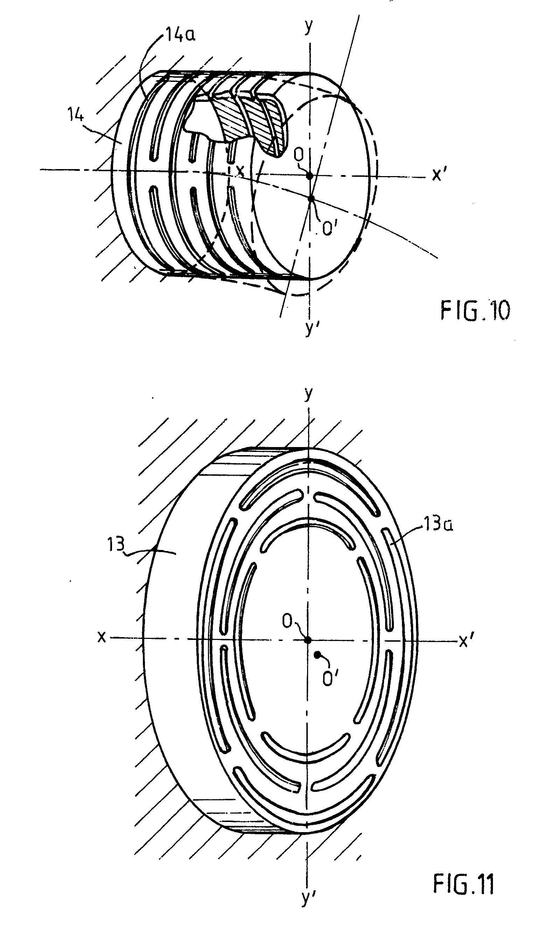

A cet effet, la fig. 10 représente un moyen de liaison repéré 14 et qui est constitué d'un cylindre mince en un matériau élastique, tel que du bronze au béryllium par exemple, et ce cylindre est ajouré radialement de lumières 14a placées en quinconce de telle sorte que les faibles déformations résultant du déplacement du point O en O' soient convenablement absorbées, tandis que la raideur K reste sensiblement constante.

La fig. 11 représente en variante un cylindre de même nature 13 dans lequel les lumières 13a sont disposées alternativement selon la direction radiale, ce qui permet également d'absorber les faibles déformations du point O en O', tandis que là encore la raideur K reste sensiblement constante.

De tels moyens présentent l'avantage de la fiabilité en ce sens que la rupture par fatigue d'une partie entre les lumières ne met pas hors service l'ensemble du dispositif.

Bien entendu, l'invention fait appel à un dispositif de blocage pour rendre solidaire la partie mobile et la partie fixe pendant le lancement du satellite. De tels mécanismes sont bien connus et sont utilisés dans le domaine spatial chaque fois qu'un équipement nécessite une liaison rigide sur une structure fixe pour supporter les vibrations se produisant pendant le lancement. C'est le cas, par exemple, pour les volants d'inertie à suspension magnétique.

Ces dispositifs de blocage sont généralement libérés à l'aide d'une étoupille pyrotechnique dont la mise à feu est effectuée par commande du sol après disparition des efforts ayant nécessité le blocage.

Il est bien évident que le procédé décrit dans le présent texte et qui porte sur l'orientation d'une antenne ou d'un volant d'inertie pour un satellite peut trouver de nombreuses applications hors du domaine spatial, notamment dans tous les systèmes terrestres, aériens ou nautiques où l'orientation avec précision d'une plate-forme porteuse d'instrument est requise.

De même il découle à l'évidence que, par application des mêmes moyens, il est possible de concevoir une plate-forme comportant un nombre différent de dispositifs électromagnétiques en restant toutefois dans le cadre minimal de trois liaisons.

Ainsi, il peut être envisagé de nombreuses combinaisons, dont notamment:

— deux points de référence et un dispositif électromagnétique,

— un point de référence, central ou non, et deux dispositifs électromagnétiques,

— un point de référence, central ou non, et trois dispositifs électromagnétiques,

— un point de référence et quatre dispositifs électromagnéiques conformes en tout point à la description ci-dessus.

Dans cet esprit, il va de soi que la présente invention n'a été décrite qu'à titre d'exemple préférentiel et qu'on pourra apporter des équivalents constitutifs sans pour autant sortir du cadre de cette invention, lequel est défini par les revendications qui suivent.

C'est ainsi que la direction du champ des aimants et la direction des conducteurs des bobines peuvent être interverties par rapport à celles décrites précédemment.

## Revendications

1. Procédé électromagnétique pour régler l'orientation d'une plate-forme, caractérisé en ce qu'il consiste, dans un système à au moins trois liaisons entre la plate-forme et un plan fixe:

— à définir un plan de référence (p) de la plate-forme et portant au moins un point de référence (O) d'assujettissement au plan fixe,

— à disposer entre ladite plate-forme et ledit plan fixe au moins un dispositif électromagnétique (A1) à aimants permanents (2, 3) liés à ladite plate-forme et à bobine (1) liée audit plan fixe,

— à détecter (s) un écart de dépointage $(\varepsilon+\delta)$ de ladite plate-forme et à délivrer une tension $(v\varepsilon)$ sensiblement proportionnelle audit dépointage,

— à amplifier (As) ladite tension à travers une chaîne d'asservissement et à appliquer le courant (i) résultant sur les conducteurs de bobine (1), de telle sorte que les forces laplaciennes engendrées sur les aimants (2, 3) par ledit courant (i) soit à même de produire le déplacement angulaire de ladite plate-forme par rapport audit plan fixe.

2. Procédé électromagnétique pour régler l'orientation d'une plate-forme selon la revendication 1, caractérisé en ce qu'il consiste à diriger le champ des aimants (2,3) dans l'entrefer (e1, e2) dans une direction radiale sensiblement parallèle au plan de référence (p) et à partir dudit point d'assujettissement (O) et les conducteurs des bobines (1) également dans une direction sensiblement parallèle audit plan (p), mais perpendiculaires au champ des aimants, de telle sorte que, selon le sens du courant dans les bobines, lesdits aimants soient amenés à provoquer un déplacement angulaire de la plate-forme.

3. Procédé électromagnétique pour régler l'orientation d'une plate-forme selon la revendication 2, caractérisé en ce qu'il consiste à intervertir la direction du champ des aimants (2,3) et la direction des conducteurs des bobines (1).

4. Procédé électromagnétique pour régler l'orientation d'une plate-forme selon la revendication 1, caractérisé en ce qu'il consiste à diriger le champ des aimants (6, 7) dans l'entrefer (e1, e2), dans un plan sensiblement parallèle au plan de référence (p) et selon une direction quelconque, et à diriger les conducteurs des bobines (8) dans ce même plan, perpendiculairement au champ des aimants.

5. Procédé électromagnétique pour régler l'orientation d'une plate-forme selon la revendication 1, caractérisé en ce qu'il consiste à superposer une tension d'écart prédéterminée de dépointage $(\delta)$ à la tension d'écart de dépointage $(\varepsilon + \delta)$ et à insérer ces tensions dans la chaîne d'asservissement.

6. Procédé électromagnétique pour régler l'orientation d'une plate-forme selon la revendication 1, caractérisé en ce qu'il consiste à produire l'assujettissement du point de référence (O) au plan fixe par des moyens mécaniques.

7. Procédé électromagnétique pour régler l'orientation d'une plate-forme selon l'une quelconque des revendications 1 à 6, caractérisé en ce qu'il consiste à conditionner la détection (s) pour la rendre sensible à l'orientation de l'axe de rotation d'un volant d'inertie (g) porté par ladite plate-forme.

8. Procédé électromagnétique pour régler l'orientation d'une plate-forme selon la revendication 5, caractérisé en ce qu'il consiste à afficher l'écart prédéterminé de dépointage $(\delta)$ sur la détection pour assurer le pilotage d'un satellite à travers ladite chaîne d'asservissement, la plate-forme portant un volant d'inertie.

9. Procédé électromagnétique pour régler l'orientation d'une plate-forme selon l'une quelconque des revendications 1 à 6, caractérisé en ce qu'il consiste à conditionner la détection (s) pour la rendre sensible à l'orientation d'une antenne de champ électromagnétique portée par ladite plate-forme.

10. Plate-forme mettant en œuvre le procédé selon l'une des revendications 1 à 9, caractérisée en ce qu'elle comprend: les dispositifs électromagnétiques (A'1, A'2) comprenant chacun les aimants (2, 3) liés à la plate-forme, laquelle contient ledit plan de référence (p); la bobine (1) liée mécaniquement audit plan fixe et disposée dans l'entrefer (e1, e2) desdits aimants; le détecteur (s) de l'écart du dépointage fournissant la tension sensiblement proportionnelle audit dépointage; la chaîne d'asservissement et d'amplification, ledit point de référence (O) étant assujetti audit plan fixe.

11. Plate-forme selon la revendication 10, caractérisée en ce que ladite chaîne d'asservissement de commande des dispositifs électromagnétiques comporte un amplificateur (As) du signal d'erreur en provenance du détecteur (s) tenant compte éventuellement d'un dépointage prédéterminé $(\delta)$, un filtre passe-bas (Fp) qui supprime le bruit en provenance du détecteur, un filtre (ap) donnant une avance de phase de la commande du courant et des amplificateurs de puissance (a1, a2) délivrant les courants (i1, i2) sur les conducteurs des bobines des dispositifs électromagnétiques (A'1, A'2).

12. Plate-forme selon l'une des revendications 10 ou 11, caractérisée en ce que la bobine (1) est enfourchée perpendiculairement au plan de référence (p) dans les entrefers des aimants (2, 3).

13. Plate-forme selon l'une des revendications 10 ou 11, caractérisée en ce que la bobine (8) est enfourchée parallèlement au plan de référence (p) dans l'entrefer des aimants (6, 7).

14. Plate-forme selon l'une des revendications 10 ou 11, caractérisée en ce que chaque dispositif électromagnétique (A'''1) est disposé de sorte que le champ des aimants (9) soit concentrique à une culasse solidaire de la plate-forme et les conducteurs circulaires des bobines (12) solidaires du plan fixe sont dans l'entrefer (e) entre lesdits aimants et ladite culasse de telle sorte que, selon le sens du courant dans les bobines, lesdits aimants soient amenés à provoquer un déplacement angulaire de la plate-forme autour du point de référence (O).

15. Plate-forme selon l'une des revendications 10 ou 11, caractérisée en ce que l'assujettissement du point de référence (O) consiste en un cylindre mince (14) en un matériau élastique ajouré selon sa face latérale de lumières tangentielles alternées (14a).

16. Plate-forme selon l'une des revendications 10 ou 11, caractérisée en ce que l'assujettissement du point de référence (O) consiste en un cylindre mince (13) en une matière élastique ajourée selon sa face frontale de lumières concentriques en secteurs alternés (13a).

17. Plate-forme selon l'une des revendications 10 ou 11, disposée sur un satellite, caractérisée en ce qu'une liaison rigide temporaire entre la plate-forme mobile et le plan fixe est utilisée pendant la phase propulsée se produisant lors du lancement du satellite, cette liaison étant supprimée avant la mise en service de la plate-forme.

**Claims**

1. An electromagnetic method of controlling the orientation of a platform, characterized in that it consists, in a system with at least three connections between the platform and a stationary plane, of defining a reference plane (p) of the platform, carrying at least one reference point (O) for attachment to the stationary plane, disposing between said platform and said stationary plane at least one electromagnetic device (A1) with permanent magnets (2, 3) connected to said platform and with a coil (1) connected to said stationary plane, detecting (s) an orientation deviation $(\varepsilon+\delta)$ of said platform, and supplying a voltage (v$\varepsilon$) substantially proportional to said deviation, amplifying (As) said voltage through a servo-control unit and applying the resulting current (i) to the conductors of the coils (1), so that the Laplacian forces generated on the magnets (2, 3) by said said current (i) are capable of causing angular displacement of said platform with respect to said stationary plane.

2. An electromagnetic method of controlling the orientation of a platform according to claim 1, characterized in that it consists of directing the field of the magnets (2, 3) into the gap (e1, e2) in a radial direction substantially parallel to the reference plane (p), and from said attachment point (O), the conductors of the coils (1) also in a direction substantially parallel to said plane (p) but perpendicular to the field of the magnets, so that, depending on the direction of the current in the coils, said magnets are brought to cause angular displacement of the platform.

3. An electromagnetic method of controlling the orientation of a platform according to claim 2, characterized in that it consists of reversing the direction of the field of the magnets (2, 3) and the direction of the conductors of the coils (1).

4. An electromagnetic method of controlling the orientation of a platform according to claim 1, characterized in that it consists of directing the field of the magnets (6, 7) in the gap (e1, e2) in a plane substantially parallel to the reference plane (p), and in any direction, and directing the conductors of the coils (8) in that same plane, perpendicularly to the field of the magnets.

5. An electromagnetic method of controlling the orientation of a platform according to claim 1, characterized in that it consists of superimposing a predetermined orientation deviation voltage $(\delta)$ on the orientation deviation voltage $(\varepsilon+\delta)$ and applying said voltages into the servo-control unit.

6. An electromagnetic method of controlling the orientation of a platform according to claim 1, characterized in that it consists of realizing the attachment of the reference point (O) to the stationary plane through mechanical means.

7. An electromagnetic method of controlling the orientation of a platform according to any of claims 1 to 6, characterized in that it consists of conditioning the detection (s) so as to make it responsive to the orientation of the rotational axis of a fly-wheel (g) carried by said platform.

8. An electromagnetic method of controlling the orientation of a platform according to claim 5, characterized in that it consists of displaying the predetermined orientation deviation $(\delta)$ upon the detection to permit pilot control of a satellite through said servo-control unit, the platform carrying a fly-wheel.

9. An electromagnetic method of controlling the orientation of a platform according to any of claims 1 to 6, characterized in that it consists of conditioning the detection (s) to make it responsive to the orientation of an electromagnetic field antenna carried by said platform.

10. A platform for implementing the method according to any of claims 1 to 9, characterized in that it comprises electromagnetic devices (A'1, A'2), each comprising: the magnets (2, 3) connected to the platform which includes said reference plane (p); the coil (1) mechanically connected to said stationary plane and disposed in the gap (e1, e2) of said magnets; the detector (s) of the orientation deviation supplying the voltage substantially proportional to said deviation and the servo-control and amplification unit, said reference point (O) being attached to said stationary plane.

11. A platform according to claim 10, characterized in that said servo-control unit controlling the electromagnetic devices comprises an amplifier (As) of the error signal from the detector (s), possibly taking into account a predetermined orientation deviation ($\delta$), a low-pass filter (Fp) cancelling noise from the detector, a filter (ap) supplying a current control phase lead, and power amplifiers (a1, a2) supplying currents (i1, i2) to the conductors of the coils of the electromagnetic devices (A'1, A'2).

12. A platform according to any of claim 10 or 11, characterized in that the coil (1) is inserted perpendicularly to the reference plane (p) in the gaps of the magnets (2, 3).

13. A platform according to any of claim 10 or 11, characterized in that the coil (8) is inserted parallel to the reference plane (p) in the gaps of the magnets (6, 7).

14. A platform according to any of claim 10 or 11, characterized in that each electromagnetic device (A'''1) is disposed in such a way that the field of the magnets (9) is concentric with a yoke secured to the platform and the circular conductors of the coils (12) secured to the stationary plane are in the gap (e) between said magnets and said yoke so that, depending on the direction of the current in the coils, said magnets are brought to cause angular displacement of the platform about the reference point (O).

15. A platform according to any of claim 10 or 11, characterized in that the attachment of the reference point (O) consists of a thin cylinder (14) of an elastic material perforated in its lateral face with alternate tangential apertures (14a).

16. A platform according to any of claim 10 or 11, characterized in that the attachment of the reference point (O) consists of a thin cylinder (13) of an elastic material perforated in its frontal face with concentric apertures in alternate sectors (13a).

17. A platform according to any of claim 10 or 11, disposed aboard a satellite, characterized in that a temporary rigid connection between the movable platform and the stationary plane is used during the propulsion phase occuring during the launching of the satellite, such connection being broken before operating the platform.

## Patentansprüche

1. Elektromagnetisches Verfahren zur Regelung der Ausrichtung einer Plattform, dadurch gekennzeichnet, dass in einem System mit wenigstens drei Verbindungen zwischen der Plattform und einer festen Fläche:
— Eine Bezugsfläche (p) der Plattform mit wenigstens einem Bezugspunkt (O) zur Befestigung an der festen Fläche festgelegt wird,
— Zwischen der Plattform und der festen Fläche wenigstens eine elektromagnetische Vorrichtung (A1) mit Permanentmagneten (2, 3), die mit der Plattform verbunden sind, sowie mit einer mit der festen Fläche verbundenen Spule (1) angeordnet wird,
— Eine Abweichungsgrösse ($\varepsilon+\delta$) der Plattform erfasst (s) und eine zu dieser Abweichung im wesentlichen proportionale Spannung (v$\varepsilon$) geliefert wird, und
— Die Spannung über eine Steuerkette verstärkt (As) und der sich ergebende Strom (i) derart auf die Leiter der Spulen (1) gegeben wird, dass die durch den Strom (i) erzeugten, und auf die Magnete (2, 3) wirkenden Laplaceschen Kräfte die winkelmässige Verlagerung der Plattform relativ zur festen Fläche bewirken.

2. Elektromagnetisches Verfahren zur Regelung der Ausrichtung einer Plattform nach Anspruch 1, dadurch gekennzeichnet, dass das Feld der Magnete (2, 3) im Luftspalt (e1, e2) in einer radialen, zur Bezugsfläche (p) im wesentlichen parallelen und vom Befestigungspunkt (O) ausgehenden Richtung und die Leiter der Spulen (1) ebenfalls in einer zur Fläche (p) im wesentlichen parallelen, jedoch zum Feld der Magnete, senkrechten Richtung derart ausgerichtet werden, dass entsprechend der Richtung des in den Spulen fliessenden Stromes die Magnete eine winkelmässige Verlagerung der Plattform hervorrufen.

3. Elektromagnetisches Verfahren zur Regelung der Ausrichtung einer Plattform nach Anspruch 2, dadurch gekennzeichnet, dass die Richtung des Feldes der Magnete (2, 3) und die Richtung der Leiter der Spulen (1) umgekehrt werden.

4. Elektromagnetisches Verfahren zur Regelung der Ausrichtung einer Plattform nach Anspruch 1, dadurch gekennzeichnet, dass das Feld der Magnete (6, 7) im Luftspalt (e1, e2) in einer zur Bezugsfläche (p) im wesentlichen parallelen Ebene und in Beliebiger Richtung und die Leiter der Spulen (8) in derselben Ebene und senkrecht zum Feld der Magnete ausgerichtet werden.

5. Elektromagnetisches Verfahren zur Regelung der Ausrichtung einer Plattform nach Anspruch 1, dadurch gekennzeichnet, dass eine Spannung einer vorgegebenen Abweichungsgrösse ($\delta$) der Spannung der Abweichungsgrösse ($\varepsilon+\delta$) überlagert wird und diese Spannungen in die Steuerkette eingeführt werden.

6. Elektromagnetisches Verfahren zur Regelung der Ausrichtung einer Plattform nach Anspruch 1, dadurch gekennzeichnet, dass die Befestigung des Bezugspunktes (O) an der festen Fläche durch mechanische Mittel herbeigeführt wird.

7. Elektromagnetisches Verfahren zur Regelung der Ausrichtung einer Plattform nach einem der Ansprüche 1 bis 6, dadurch gekennzeichnet, dass die Erfassung (s) derart durchgeführt wird, dass sie auf die Ausrichtung der Drehachse eines von der Plattform getragenen Trägheitsschwungrades (g) anspricht.

8. Elektromagnetisches Verfahren zur Regelung der Ausrichtung einer Plattform nach Anspruch 5, dadurch gekennzeichnet, dass die vorgegebene Abweichungsgrösse ($\delta$) bei der Erfassung angezeigt wird, um über die Steuerkette die Lageregelung eines Satelliten sicherzustellen, bei dem die Plattform ein Trägheitsschwungrad trägt.

9. Elektromagnetisches Verfahren zur Regelung der Ausrichtung einer Plattform nach einem der Ansprüche 1 bis 6, dadurch gekennzeichnet, dass die Erfassung (s) derart durchgeführt wird, dass sie auf die Ausrichtung einer von der Plattform getragenen Magnetfeldantenne anspricht.

10. Plattform zur Durchführung des Verfahrens nach einem der Ansprüche 1 bis 9, dadurch gekennzeichnet, dass sie die elektromagnetischen Vorrichtungen (A'1, A'2), von denen jede die mit der die Bezugsfläche (p) aufweisenden Plattform verbundenen Magnete (2, 3) aufweist, die Spule (1), die mechanisch mit der festen Fläche verbunden und im Luftspalt (e1, e2) der Magnete angeordnet ist, den Detektor (s) zur Erfassung der Abweichungsgrösse, der eine zu dieser Abweichung im wesentlichen proportionale Spannung liefert, und die Steuer- und Verstärkungskette umfasst, und dass der Bezugspunkt (O) an der festen Fläche befestigt ist.

11. Plattform nach Anspruch 10, dadurch gekennzeichnet, dass die Steuerkette zur Steuerung der elektromagnetischen Vorrichtungen einen Verstärker (As) für ein Fehlersignal, das aufgrund einer eventuellen vorgegebenen Abweichung ($\delta$) vom Detektor (s) geliefert wird, ferner ein Tiefpassfilter (Fp) zur Unterdrückung des vom Detektor stammenden Rauschens, ein Filter (ap), das eine Phasenvorteilung der Stromsteuerung liefert, sowie Leistungsverstärker (a1, a2), die die Ströme (i1, i2) in den Leitern der Spulen der elektromagnetischen Vorrichtungen (A'1, A'2) liefern, umfasst.

12. Plattform nach einem der beiden Ansprüche 10 oder 11, dadurch gekennzeichnet, dass die Spule (1) senkrecht zur Bezugsfläche (p) in den Luftspalten der Magnete (2, 3) eingesetzt ist.

13. Plattform nach einem der beiden Ansprüche 10 oder 11, dadurch gekennzeichnet, dass die Spule (8) parallel zur Bezugsfläche (p) in dem Luftspalt der Magnete (6, 7) eingesetzt ist.

14. Plattform nach einem der beiden Ansprüche 10 oder 11, dadurch gekennzeichnet, dass jede elektromagnetische Vorrichtung (A'''1) derart ausgelegt ist, dass das Feld der Magnete (9) zu einem fest mit der Plattform verbundenen Joch konzentrisch ist, und die kreisförmigen Leiter der fest mit der festen Fläche verbundenen Spulen (12) derart in dem Luftspalt (e) zwischen diesen Magneten und dem Joch liegen, dass die Magnete entsprechend der Richtung des in den Spulen fliessenden Stromes eine winkelmässige Verlagerung der Plattform um den Bezugspunkt (O) bewirken.

15. Plattform nach einem der beiden Ansprüche 10 oder 11, dadurch gekennzeichnet, dass die Befestigung des Bezugspunktes (O) aus einem kleinen Zylinder (14) aus elastischem Material besteht, dessen Seitenfläche durch abwechselnde, in tangentialer Richtung verlaufende Öffnungen (14a) durchbrochen ist.

16. Plattform nach einem der beiden Ansprüche 10 oder 11, dadurch gekennzeichnet, dass die Befestigung des Bezugspunktes (O) aus einem kleinen Zylinder (13) aus elastischem Material besteht, dessen Stirnfläche durch konzentrische, abwechselnde Ausschnitte bildende Öffnungen (13a) durchbrochen ist.

17. Plattform nach einem der beiden Ansprüche 10 oder 11, die auf einem Satelliten angeordnet ist, dadurch gekennzeichnet, dass eine vorübergehende feste Verbindung zwischen der beweglichen Plattform und der festen Fläche während der zur Zeit des Satellitenstarts auftretenden Schubphase vorgesehen ist, und diese Verbindung vor Inbetriebnahme der Plattform aufgehoben wird.

FIG.1

FIG. 2

FIG.3

13

FIG.5

FIG.4

FIG.7

FIG.6

FIG.9

FIG.8

FIG.10

FIG.11